# EUROPEAN PATENT SPECIFICATION

(11) **EP 1 959 531 B1**
(45) Date of publication and mention of the grant of the patent: **04.04.2012**
(21) Application number: 08100807.0
(22) Date of filing: 23.01.2008
(51) Int. Cl.: H02G 3/08

(54) **Electrical all-purpose installation box in watertight version**
Allzweck Elektroinstallationsdose in wasserdichter Darstellung
Boîtier d'installation électrique polyvalente en version étanche

(30) Priority: 16.02.2007 DK 200700249
(43) Date of publication of application: 20.08.2008
(73) Proprietor: Nielsen, Alf, 3210 Vejby (DK)
(72) Inventor: Nielsen, Alf, 3210 Vejby (DK)
(74) Representative: Joergensen, Bjoern Barker

(56) References cited:
- WO-A1-85/01396
- WO-A1-99/54975

## Description

The present invention relates to an electrical installation box for low voltage installations comprising a bottom wall with an upright circumferential side wall extending therefrom and a lid sealingly connected to the side wall, whereby one or more lead-ins for electrical cables or wires are formed in the side wall, which lead-ins are separately sealingly closed by a humidity-impermeable membrane, the membrane of at least one lead-in being designed for the introduction of cables or wires with different outer cross sections, a penetration portion with reduced thickness relative to the side wall being formed in the membrane.

WO 85/01396 describes how to design a standard electrical installation box for use in dry environments with side lead-ins dimensioned for receiving installation cables and flexible wires with different wire cross sections, each lead-in typically comprising a set of notch lines which can, by penetration with an appropriate tool, provide lead-ins of various sizes for a respective one of a number of possible wire cross sections. This prior-art box is also provided with a wire relief device for relieving flexible wires which are to be connected to other installation elements such as connectors, terminal strips, switches, etc., inside the box.

The increase in the use of electrical installations in humid environments, for example, outside in connection with lighting systems and the like, has resulted in an increased demand for watertight installation boxes with similar flexible applications for connecting cables or flexible wires with different outer diameters to electrical installation elements, for example of the above types, inside the box.

For this purpose a so-called membrane box is in the market, wherein a number of side wall lead-ins are individually sealingly closed by a humidity-impermeable membrane and dimensioned for respective wire or cable dimensions. Such a box may be provided with a reversible relief bracket for use in connection with the introduction of a flexible wire.

Further, WO99/54975 describes an installation box of the type described in the introduction, wherein each wire or cable lead-in is sealingly closed by a membrane, the membrane of at least one lead-in being designed for the introduction of cables or wires with different outer dimensions. In this prior-art box the lead-ins are arranged in immediate connection with the bottom of the box to avoid the otherwise necessary bending of cables or wires visibly laid upon a base for the installation box. In this connection a penetrating notch for the membrane is also arranged eccentrically in immediate connection with the bottom of the box.

Due to the eccentric position of the notch opposite to the lead-in rim in immediate connection with the bottom, the use of this prior-art installation box, particularly at the introduction of wires and cables with larger diameters, frequently results in insufficient sealing around an introduced flexible and thus movable wire adjacent on one side to the thin membrane material and on the other to the larger thickness of the bottom wall so that the intended protection of the inside of the box against permeation of humidity is not obtained.

Against this background, it is the object of the invention to provide a humidity-proof installation box of the type described with one or more membrane-closed lead-ins designed for the introduction of cables or wires with different dimensions while fully maintaining the humidity-blocking properties of the membrane, the installation box for the introduction of flexible wires being further designed with an integral wire relief easily accessible for the introduction of wires through the lead-ins intended for the various cable and wire dimensions.

In view of this object, an electrical installation box of the type described according to the invention is characterised in that a relief device arranged in the box for retaining and relieving flexible wires from tension and torsion comprises an abutment part firmly connected with the bottom wall, and that the said at least one lead-in is located in the side wall opposite to said abutment part, whereby the membrane associated with the said lead-in is designed with at least two substantially circular penetration marks for flexible wires with different diameters, which penetration marks are located in a central portion of the membrane with said reduced wall thickness and with mutually displaced central positions arranged substantially in a line of symmetry for this central portion so that, when one of the at least two penetration marks is used, flexible wires may, regardless of the wire diameter, be introduced into the box substantially in parallel with the bottom wall to abut on the abutment part of the relief device, whereby said central portion is designed with a non-circular outer contour extending substantially equidistantly around the penetration marks, from which outer contour the thickness of the membrane continuously increases in the direction of an outer edge of the lead-in.

The described location of two or more penetration marks for flexible wires in a central portion of the membrane ensures that a wire introduced through such penetration mark, regardless of the outer diameter of the wire, is always surrounded by sufficient flexible membrane material to absorb the movement of the wire, thus obtaining a completely sealed connection of the membrane to the outside of the wire.

Further, due to the described mutually displaced location of the central positions of the penetration marks, an introduced flexible wire inside the box is passed to abut on the abutment part of the relief device in a substantially rectilinear course substantially in parallel with the bottom wall of the box. The penetration marks are thus preferably located in the same line perpendicular to the bottom wall of the box and in an order so that the penetration mark for the smallest wire diameter is closest to the bottom wall of the box at a distance therefrom substantially corresponding to the sum of the height of the abutment part of the wire relief and the radius of the relevant wire cross section.

Preferred and advantageous embodiments of the installation box according to the invention are stated in the dependent claims.

The invention will now be described in more detail below by means of an example of an embodiment and with reference to the drawing, in which
Figs. 1-3 are sectional views of an embodiment of an installation box according to the invention with a membrane-closed lead-in for wires with three different dimensions,
Figs. 4-6 are plane views of a wire lead-in in the installation box shown in Figs. 1-3, showing the introduction of wires with three different dimensions, and
Figs. 7 and 8, respectively, are a plane view and a cross-sectional view, on a larger scale, of a side wall segment of the installation box shown in Figs. 1-3 around a wire lead-in in the installation box.

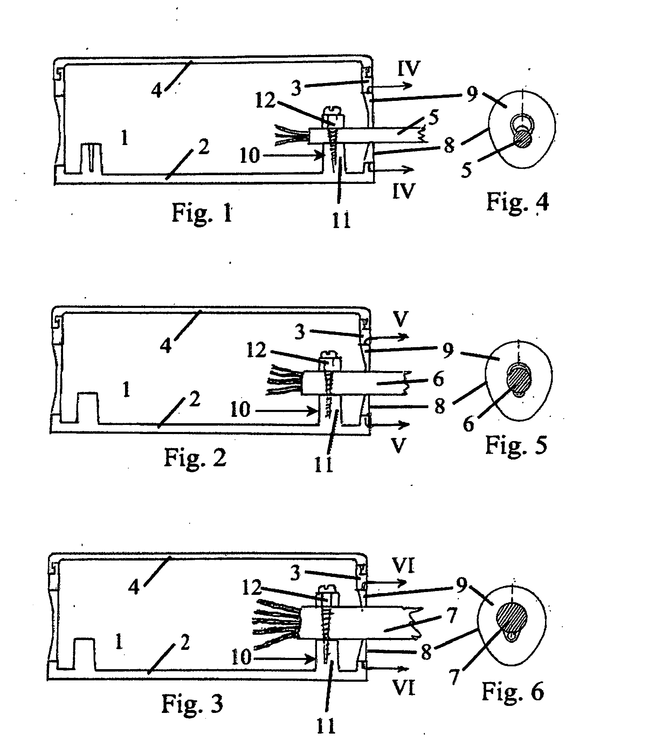

As appears from Figs. 1-3, the installation box 1 in the embodiment shown comprises a bottom wall 2 with an upright side wall 3 extending therefrom and a lid 4 which, in a manner known *per se,* is designed for sealing connection with the upper edge of the side wall 3.

In the side wall 3 of the installation box 1 a number of lead-ins 8 are formed for electrical cables or flexible wires as shown by 5, 6 and 7. The lead-ins 8, which will be described in more detail below, are separately sealingly closed by a humidity-impermeable membrane 9.

For retaining and relieving a flexible wire 5, 6 or 7 introduced into the box 1 through the lead-in 8, the box 1 is provided with a wire relief device 10 with a design known *per se* and comprising an abutment part 11 firmly connected with the bottom wall 2 and a fixing bracket 12 designed for screw connection with the abutment part 11.

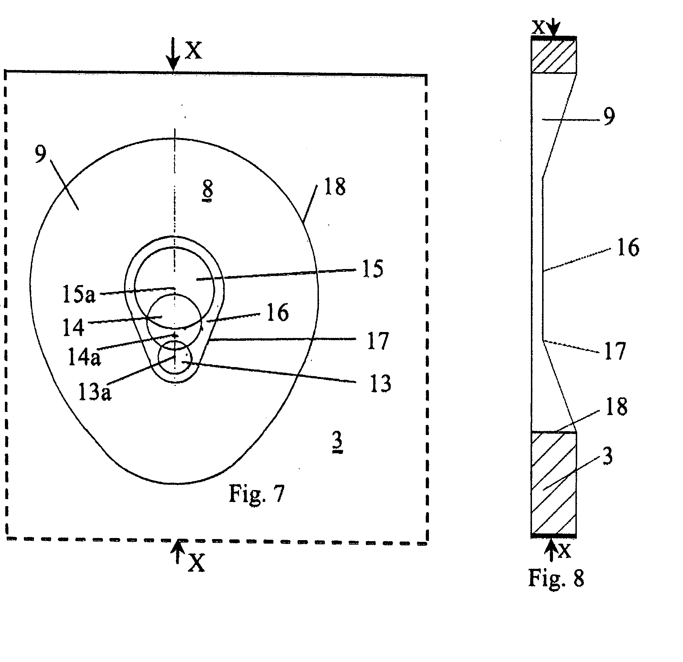

The cable or wire lead-in 8 with the pertaining humidity-impermeable membrane 9 is located in the side wall 2 opposite to the wire relief device 10. For reception of the wires 5, 6 or 7 as shown in Figs. 1-3 with different outer diameters, the membrane 9 in the embodiment shown is designed with three substantially circular penetration marks 13, 14 and 15, respectively, as most clearly appears from the plane view in Fig. 7 of a segment of the side wall 3 around the lead-in 8.

As shown in Fig. 7, the substantially circular penetration marks 13, 14 and 15 are located in a central portion 16 of the membrane 9. As most clearly appears from the cross section in Fig. 8, said central portion has a considerably reduced thickness relative to the thickness of the side wall 3 of the installation box 1 opposite to the lead-in 8. As appears from Fig. 8, the thickness of the membrane 9 in the central portion 16 may suitably constitute 20 to 40 per cent of the side wall thickness, for example, 0.8 to 1.0 mm for a thickness of the side wall 3 in the interval from 2 to 4 mm.

In the central portion 16 of the membrane 9, the substantially circular penetration marks 13-15 are located with mutually displaced respective central positions 13a, 14a and 15a so that the flexible wires 5, 6 and 7 of different outer diameters may, regardless of their outer diameters, be introduced into the box substantially in parallel with the bottom wall 2 to abut on the abutment part 11 of the relief device 10.

The penetration marks 13, 14 and 15 may, for example, be intended for wires with outer diameters of 3, 7 and 14 mm, respectively, and are preferably located in the central portion 16 with their central positions 13a, 14a and 15a, respectively, located in a line of symmetry perpendicular to the bottom wall 2 of the box 1 opposite to the abutment part 11 of the wire relief device 10. From the bottom wall 2 the penetration marks 13, 14 and 15 are located in an order so that the mark 13 for the wire 5 with the smallest diameter is closest to the bottom wall 2 followed by the marks 14 and 15 for the wires 6 and 7 with their respective larger diameters.

The distance of the central positions 13a, 14a and 15a from the bottom wall 2 of the box 1 will, as appears from Figs. 1-3, be geometrically determined by the sum of the height of the abutment part 11 of the wire relief 10 above the bottom wall and the radius of the wire dimension for which the particular penetration mark is intended. The location of central positions is, however, not bound by such geometry, as each of the penetration marks may be used for wires with a slightly larger or smaller diameter, for example, so that a penetration mark nominally intended for a wire diameter of 5 mm may be used for wire diameters between e.g. 4 and 6 mm without difficulty.

The penetration marks 13, 14 and 15 shown on the front of the membrane 9 serve in practice only as legends specifying which position on the membrane is to be penetrated when introducing a wire with a particular outer diameter. When the installation box is used, the penetration is suitably carried out by means of an appropriate tool, for example, a screwdriver in the central position of the penetration mark coming nearest to the particular wire dimension. When the wire is subsequently pressed through the lead-in, the surrounding part of the membrane 9 will connect sealingly to the outside of the wire and provide a humidity-proof wire passage. As appears from the plane views in Figs. 4-6, the outside of an introduced wire 5, 6 or 7 will normally be arranged at least partially outside the central portion 16 of the membrane 9 where the penetration marks 13, 14 and 15 are located. The thickness of the membrane 9 increases gradually outside the central portion 16, which contributes to ensuring a tight-fitting and symmetrical sealing abutment of the membrane on the outside of the wire.

As mentioned above, the central portion 16 of the membrane 9, in which the penetration marks 13, 14 and 15 are located, has a considerably reduced thickness relative to the thickness of the side wall 3 of the box 1. The central portion is delimited from the surrounding part of the membrane 9 by a non-circular outer contour 17 extending substantially equidistantly around the penetration marks 13-15. The lead-in 8 and the membrane 9 are delimited from the surrounding segments of the side wall 3 by an outer edge 18, which has substantially the same shape as the outer contour 17 of the central portion 16.

In the part of the membrane 9 surrounding the central portion 16, the thickness of the membrane increases continuously, for example, linearly, from the reduced thickness at the outer contour 17 of the central portion 16 to the thickness of the side wall 3 at the outer edge 18, as shown in Fig. 8.

In the embodiment shown, the membrane 9 and its central portion 16 thus show a substantially egg-like or pear-like plane shape defined by the contours of the penetration marks 13 and 15 for the smallest and the largest of the three wire dimensions for which the lead-in 8 in the particular example is intended.

In particular, the number of penetration marks may be higher or lower than the three shown, for example, two or four.

## Claims

1. An electrical installation box for low voltage installations comprising a bottom wall (2) with an upright circumferential side wall (3) extending therefrom and a lid (4) sealingly connected to the side wall (3), whereby one or more lead-ins (8) for electrical cables or wires (5-7) are formed in the side wall (3), which lead-ins (8) are separately sealingly closed by a humidity-impermeable membrane (9), the membrane of at least one lead-in (8) being designed for the introduction of cables or wires (5-7) with different outer dimensions, a penetration portion with reduced thickness relative to the side wall (3) being formed in the membrane (9), **characterised in that** a relief device (10) arranged in the box (1) for retaining and relieving flexible wires (5-7) from tension and torsion comprises an abutment part (11) firmly connected with the bottom wall (2), and that the said at least one lead-in (8) is located in the side wall (3) opposite to said abutment part (11), whereby the membrane (9) associated with the said lead-in (8) is designed with at least two substantially circular penetration marks (13-15) for flexible wires (5-7) with different diameters, which penetration marks (13-15) are located in a central portion (16) of the membrane (9) with said reduced wall thickness and with mutually displaced central positions (13a-15a) arranged substantially in a line of symmetry for this central portion so that, when one of the at least two penetration marks (13-15) is used, said flexible wires (5-7) may, regardless of the wire diameter, be introduced into the box (1) substantially in parallel with the bottom wall (2) to abut on the abutment part (11) of the relief device (10), whereby said central portion (16) is designed with a non-circular outer contour (17) extending substantially equidistantly around the penetration marks (13-15), from which outer contour (17) the thickness of the membrane (9) continuously increases in the direction of an outer edge (18) of the lead-in (8).

2. An electrical installation box according to claim, 1, **characterised in that** the penetration marks (13-15) are located with their central positions (13a-15a) mutually displaced on a line of symmetry for this central portion with locations substantially defined by the sum of the height of the abutment part (11) of the relief device (10) above the bottom wall (2) and the radius of the wire dimension for which the particular penetration mark is intended.

3. An electrical installation box according to claim 1 or 2, **characterised in that** the at least two penetration marks (13-15) are designed with a respective reduced diameter relative to flexible wires with outer diameters in the interval from 3 to 14 mm.

4. An electrical installation box according to any one of claims 1 to 3, **characterised in that** the thickness of the central portion (16) of the membrane (9) amounts to 20 to 40 per cent of the thickness of the side wall (3) of the box (1).

5. An electrical installation box according to any one of claims 1 to 4, **characterised in that** the membrane (9) is designed with three penetration marks (13-15) of individual sizes.

6. An electrical installation box according to any one of claims 1 to 5, **characterised in that** the outer contour of each penetration mark is indicated on the outside of the membrane (9).

## Patentansprüche

1. Elektroinstallationsdose für Niederspannungsinstallationen mit einer Bodenwand (2) mit einer aufrechten Umfangsseitenwand (3), die sich davon erstreckt, und einem Deckel (4), der abdichtend mit der Seitenwand (3) verbunden ist, wobei eine oder mehrere der Zuleitungen (8) für elektrische Kabel oder Drähte (5 bis 7) in der Seitenwand (3) ausgebildet sind, wobei die Zuleitungen (8) getrennt abdichtend durch eine feuchtigkeitsdichte Membran (9) verschlossen sind, wobei die Membran zumindest einer Zuleitung (8) für das Einführen von Kabeln oder Drähten (5 bis 7) mit unterschiedlichen äußeren Abmessungen gestaltet ist, einem Durchdringungsabschnitt mit reduzierter Dicke relativ zu der Seitenwand (3), die in der Membran (9) ausgebildet ist, **dadurch gekennzeichnet, dass** eine Entlastungsvorrichtung (10), die in der Dose (1) zum Halten und zum Entlasten von flexiblen Drähten (5 bis 7) von Spannung und Torsion angeordnet ist, ein Stützteil (11) aufweist, das fest mit der Bodenwand (2) verbunden ist, und **dadurch**, dass die zumindest eine Zuleitung (8) in der Seitenwand (3) gegenüber dem Stützteil (11) angeordnet ist, wobei die Membran (9), die zu der Zuleitung (8) gehört, mit zumindest zwei im Wesentlichen kreisförmigen Durchdringungsmarkierungen (13 bis 15) für flexible Drähte (5 bis 7) mit unterschiedlichen Durchmessern gestaltet ist, wobei die Durchdringungsmarkierungen (13 bis 15) in einem zentralen Abschnitt (16) der Membran (9) mit reduzierter Wanddicke und mit zueinander versetzten zentralen Positionen (13a bis 15a) positioniert sind, die im Wesentlichen in einer Symmetrielinie für diesen zentralen Abschnitt angeordnet sind, sodass, wenn eine der zumindest zwei Durchdringungsmarkierungen (13 bis 15) verwendet wird, die flexiblen Drähte (5 bis 7) unabhängig von dem Drahtdurchmesser in die Dose (1) im Wesentlichen parallel zu der Bodenwand (2) eingeführt werden können, sodass sie an dem Stützteil (11) der Entlastungsvorrichtung (10) gestützt werden, wobei der zentrale Abschnitt (16) mit einer nichtkreisförmigen äußeren Kontur (17) gestaltet ist, die sich im Wesentlichen mit gleichem Abstand um die Durchdringungsmarkierungen (13 bis 15) erstreckt, wobei die Dicke der Membran (9) von der äußeren Kontur (17) kontinuierlich in die Richtung eines äußeren Rands (18) der Zuleitung (8) zunimmt.

2. Elektroinstallationsdose nach Anspruch 1, **dadurch gekennzeichnet, dass** die Durchdringungsmarkierungen (13 bis 15) mit ihren zentralen Positionen (13a bis 15a), die zueinander auf einer Symmetrielinie für diesen zentralen Abschnitt versetzt sind, bei Stellen positioniert sind, die im Wesentlichen durch die Summe der Höhe des Stützteils (11) der Entlastungsvorrichtung (10) über der Bodenwand (2) und dem Radius der Drahtabmessung definiert sind, für welchen die spezielle Durchdringungsmarkierung bestimmt ist.

3. Elektroinstallationsdose nach Anspruch 1 oder 2, **dadurch gekennzeichnet, dass** die zumindest zwei Durchdringungsmarkierungen (13 bis 15) mit einem entsprechenden reduzierten Durchmesser relativ zu flexiblen Drähten mit äußeren Durchmessern in dem Bereich von 3 bis 14 mm gestaltet sind.

4. Elektroinstallationsdose nach einem der Ansprüche 1 bis 3, **dadurch gekennzeichnet, dass** die Dicke des zentralen Abschnitts (16) der Membran (9) 20 bis 40 % der Dicke der Seitenwand (3) der Dose (1) beträgt.

5. Elektroinstallationsdose nach einem der Ansprüche 1 bis 4, **dadurch gekennzeichnet, dass** die Membran (9) mit drei Durchdringungsmarkierungen (13 bis 15) individueller Größen gestaltet ist.

6. Elektroinstallationsdose nach einem der Ansprüche 1 bis 5, **dadurch gekennzeichnet, dass** die äußere Kontur jeder Durchdringungsmarkierung an der Außenseite der Membran (9) angegeben ist.

## Revendications

1. Boîtier d'installation électrique pour installations basse tension, comprenant une paroi inférieure (2), une paroi latérale (3) circonférentielle verticale s'étendant à partir de celle-ci, et un couvercle (4) monté de façon étanche sur la paroi latérale (3), dans lequel une ou plusieurs entrées de fil (8) pour des câbles ou des fils électriques (5 à 7) sont formées dans la paroi latérale (3), lesquelles entrées de fil (8) sont fermées séparément, de façon étanche, par une membrane (9) imperméable à l'humidité, la membrane d'au moins une entrée de fil (8) étant conçue pour l'introduction de câbles ou de fils (5 à 7) de différentes dimensions extérieures, une partie de pénétration, d'épaisseur réduite par rapport à la paroi latérale (3), étant formée dans la membrane (9), **caractérisé en ce qu'**un dispositif anti-contrainte (10), ménagé dans le boîtier (1) pour retenir des fils souples (5 à 7) et les libérer de toutes tensions et torsions, comprend une partie d'appui (11) fermement reliée à la paroi inférieure (2), et **en ce que** ladite au moins une entrée de fil (8) se trouve dans la paroi latérale (3), en face de ladite partie d'appui (11), dans lequel la membrane (9) associée à ladite entrée de fil (8) est conçue avec au moins deux marques de pénétration (13 à 15) essentiellement circulaires, pour des fils souples (5 à 7) de différents diamètres, lesquelles marques de pénétration (13 à 15) se trouvent dans une partie centrale (16) de la membrane (9) ayant ladite épaisseur de paroi réduite et ayant des positions centrales (13a à 15a) décalées les unes par rapport aux autres, disposées essentiellement sur une ligne de symétrie de cette partie centrale, de sorte que, lorsqu'une des au moins deux marques de pénétration (13 à 15) est utilisée, lesdits fils souples (5 à 7) peuvent, indépendamment du diamètre du fil, être introduits dans le boîtier (1) de façon essentiellement parallèle à la paroi inférieure (2), pour venir en butée sur la partie d'appui (11) du dispositif anti-contrainte (10), dans lequel ladite partie centrale (16) est conçue avec un contour extérieur (17) non circulaire s'étendant de façon essentiellement équidistante autour des marques de pénétration (13 à 15), contour extérieur (17) à partir duquel l'épaisseur de la membrane (9) augmente en continu dans la direction d'un bord extérieur (18) de l'entrée de fil (8).

2. Boîtier d'installation électrique selon la revendication 1, **caractérisé en ce que** les marques de pénétration (13 à 15) se trouvent, avec leurs positions centrales (13a à 15a) décalées les unes par rapport aux autres, sur une ligne de symétrie de cette partie centrale, à des emplacements essentiellement définis par la somme de la hauteur de la partie d'appui (11) du dispositif anti-contrainte (10) au-dessus de la paroi inférieure (2) et du rayon de la dimension de fil pour laquelle la marque de pénétration concernée est conçue.

3. Boîtier d'installation électrique selon la revendication 1 ou 2, **caractérisé en ce que** les au moins deux marques de pénétration (13 à 15) sont conçues avec un diamètre réduit respectif par rapport à des fils souples ayant un diamètre extérieur dans la gamme de 3 à 14 mm.

4. Boîtier d'installation électrique selon l'une quelconque des revendications 1 à 3, **caractérisé en ce que** l'épaisseur de la partie centrale (16) de la membrane (9) est égale à 20 à 40 pour cent de l'épaisseur de la paroi latérale (3) du boîtier (1).

5. Boîtier d'installation électrique selon l'une quelconque des revendications 1 à 4, **caractérisé en ce que** la membrane (9) est conçue avec trois marques de pénétration (13 à 15) de tailles individuelles.

6. Boîtier d'installation électrique selon l'une quelconque des revendications 1 à 5, **caractérisé en ce que** le contour extérieur de chaque marque de pénétration est indiqué sur l'extérieur de la membrane (9).
